(19)

**Europäisches Patentamt**

**European Patent Office**

**Office européen des brevets**

(11) **EP 2 704 065 A1**

(12) **EUROPEAN PATENT APPLICATION**

(43) Date of publication:
**05.03.2014 Bulletin 2014/10**

(51) Int Cl.:
***G06N 99/00*** (2010.01)

(21) Application number: **12179412.7**

(22) Date of filing: **06.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ATS Group (IP Holdings) Limited Road Town, Tortola (VG)**

(72) Inventors:
• **Huber, Marco**
  **64295 Darmstadt (DE)**
• **Debes, Christian**
  **64295 Darmstadt (DE)**

(74) Representative: **Börner, Robert et al**
**Murgitroyd & Company**
**Scotland House**
**165-169 Scotland Street**
**Glasgow G5 8PL (GB)**

(54) **System and method for updating a data structure with sensor measurement data**

(57)    A computer implemented method (200), computer program product, and computer system for updating a data structure reflecting a spatio-temporal phenomenon in a physical area, wherein the spatio-temporal phenomenon is estimated at any location of the physical area by a Gaussian Process with a mean function and a covariance function, the method (200) comprising: storing (210) a data set adapted to represent fixed locations of the physical area, wherein the data set has a mean vector and a covariance matrix according to the Gaussian Process, and wherein the data structure includes the mean vector and the covariance matrix; receiving (222, 224) sensor measurement data of the spatio-temporal phenomenon from at least one sensor node out of a plurality of sensor nodes located at specific arbitrary locations of the physical area; and merging (230, 232, 234, 236, 238) the specific arbitrary locations and the received measurement data into the data structure by using exact recursive Bayesian regression.

FIG. 2

## Description

### Technical Field

The present invention generally relates to electronic data processing and in particular to systems and methods for processing sensor measurement data.

### Background

Measurement, estimation, and prediction of spatio-temporal phenomena, such as a gas, temperature, or wind, are relevant to various use cases. For instance, a spatio-temporal phenomenon such as gas pollution in urban environments may harm the health of the locals if it exceeds a certain threshold. For example, carbon monoxide (CO) and carbon dioxide (CO2) are such gases. Therefore, a precise estimation and prediction of gas pollution in a specific region at a specific time can help to prevent harmful situations. Such spatio-temporal phenomena may also be observed in other situations, for example, in astrophysics, medicine, robotics, human-computer interaction, and geo-physics.

Spatially distributed sensor networks typically include a large number of sensor nodes which provide measurement data about spatio-temporal phenomena in their vicinity. The sensor nodes may be distributed uniformly or irregular throughout the area. The size of the area can range from as small as, for example, a small lake to a megacity or even the night sky. The sensor nodes may cover the area in a fine or coarse pattern. Furthermore, such sensor networks normally measure large amounts of data for an analysis. In addition to that, the analysis is more complicated because the data is noisy. However, performing a space-time regression analysis for estimation and prediction on such large data sets of sensor measurements are computationally demanding or even intractable.

Spatio-temporal phenomena are often assumed to be Gaussian distributed, and, therefore, a Gaussian Process (GP) regression for estimating the unknown distribution of a spatio-temporal phenomenon can be applied. GPs allow non-parametric learning of a regression function from noisy data; this is also called training. GPs can be considered Gaussian distributions over functions conditioned on the data. Thus, GPs provide a regression function for estimation and prediction as well as uncertainty estimates, for example, error bars, depending on the noise and the variability of the data. However, because of the non-parametric nature of GPs, computations for training a GP scales with $O(n^3)$, where n is the number of data points, for example, the complete set of measured data. The so-called Big-$O$-Notation is an indicator for the limiting behavior of a function when its argument tends to a particular value, typically a very big number or infinity. The Big-$O$-Notation, therefore, describes the computational load on a processor. Since a measurement of a spatio-temporal phenomenon normally results in large amounts of data, that is, the argument n, the cubic behavior $O(n^3)$ is prohibitive for processing on computers with standard processors. Furthermore, the update of the GP with new measurement data is even more demanding since each new training session requires batch processing of all measurement data acquired over time. In addition, since all measurement data has to be available all of the time, enough memory capabilities, such as Random Access Memory (RAM) and mass storage, have to be provided. For GP see also: Carl E. Rasmussen and Christopher Williams. Gaussian Processes for Machine Learning. MIT Press, 2006.

In order to reduce the computational load, current approaches in the prior art propose approximations which operate on a subset of size s of the training data, wherein size s of the data set is significantly smaller than the full set of measured data n. This can reduce the computational load for training of the regression function of a GP to $O(s^2n)$. However, these approaches assume that the whole data set is available prior to the training and, thus, training is performed in one batch run. When new training data is available, an update by these approaches requires all measurement data acquired over time being processed in $O(s^2n)$, wherein n is now increased since it holds the new measurement data as well. This also requires respective memory capabilities for all historic measurement data. Although these approaches are able to reduce the computational load to a certain degree, depending on the overall reduction to the size s of the data set, it is not applicable for sequentially arriving training data. Moreover, in order to notably reduce the computational complexity, the size s of the data set has to be reduced to a significantly smaller number compared to n. Thereby, to receive accurate results the approaches require a thorough and appropriate selection of the data set s; otherwise, the accuracy of the training results decreases significantly because the prediction which is based on the data subset s is typically performed in, for example, a heuristic manner.

In typical use cases of estimation and prediction of spatio-temporal phenomena, training data arrives in a sequence, for example, in a time series. Thus, a batch processing is not practicable but rather a sequential training of GPs is required. Approaches in the prior art for sequential training are known. The sequential training is, for example, achieved by using the sensor measurement to update a state estimate of a priori known fixed sensor locations which might even have to be uniformly distributed throughout the area. Therefore, measurement data of mobile sensor nodes, such as a sensor integrated into a vehicle or a smartphone, cannot be taken into account, and, however, complex environments, such as urbanized areas, might not allow a uniformly distributed sensor network. Moreover, some of these approaches are heavily application specific or only applicable for one-dimensional inputs, such as measurement data of carbon monoxide (CO).

## Summary

Therefore, there is a need to improve the GP regression by making it computationally and memory-wise more efficient.

Embodiments of the invention provide system and method for accurate sequential training of GPs for spatio-temporal phenomena in complex environments with multi-dimensional measurement data. Furthermore, the GP regression training can be independent from a specific application scenario and can be used for an a priori unknown sensor network comprising fixed as well as mobile sensor nodes.

By an aspect of the invention, sequentially received sensor node measurement data from arbitrary sensor locations in a respective area is recursively processed by a computer to update a data structure. Thereby, the resulting computational complexity is $O(n)$. The data structure holds all information for a GP estimation and prediction of a respective spatio-temporal phenomenon. The data structure only requires a limited memory capacity, since in this approach, historic measurement data of sensor nodes is incorporated into the data structure without storing the raw measurement data. In other words, the raw data can be discarded once the data structure has been updated with the received measurement data.

The data structure reflects a spatio-temporal phenomenon in a physical area, wherein the spatio-temporal phenomenon is estimated at any location of the physical area by a Gaussian Process with a mean function and a covariance function. In other words, the mean function describes the trend of the spatio-temporal phenomenon in terms of a general function of any location and the covariance function describes the correlation of any two locations. The actual function of the spatio-temporal phenomenon is not known. But the GP is used for estimations of the values of that spatio-temporal phenomenon.

A computer implemented method for updating the data structure according to one embodiment of the invention includes: storing a data set that is adapted to represent fixed locations of the physical area, wherein the data set has a mean vector and a covariance matrix according to the Gaussian Process, and wherein the data structure includes the mean vector and the covariance matrix; receiving sensor measurement data of the spatio-temporal phenomenon from at least one sensor node out of a plurality of sensor nodes located at specific arbitrary locations of the physical area; and merging the specific arbitrary locations and the received measurement data into the data structure by using a so-called exact recursive Bayesian regression.

The "data set that is adapted to represent fixed locations" is also referred to "the data set adapted to represent fixed locations" as well as "data set of fixed locations" or just "data set" when the context clearly defines it.

The computer implemented method advantageously allows that the received sensor measurement data needs not to be stored for a later GP learning, because the merging step incorporates the received measurement data into the data structure. In other words, the measurement data provided by the sensor nodes is incorporated into the mean vector, and the location data of the sensor nodes into the covariance matrix. Therefore, only limited memory capacity is required; compared to the prior art, less memory is required.

Furthermore, the fixed locations and the specific arbitrary locations of the sensor nodes need not to be identical. The fixed locations can be chosen uniformly distributed over the area; a random distribution or any other appropriate distribution is also possible. Moreover, the number of fixed locations can be significantly smaller than the number of the specific arbitrary locations or the sum of respective numbers of specific arbitrary locations when receiving sensor measurement data sequentially. As long as the number of fixed locations is not changed, the computer implemented method can be computed in $O(n)$. In other words, the data structure can be updated by a processor in a computational linear effort, thus, reducing the runtime significantly compared to prior art.

In addition, the exact recursive Bayesian regression is exact in the sense that it has no calculation which is based on, for example, heuristic approximation like in prior art. In fact, it is an exact calculation during the GP learning and, therefore, can be applied on various application scenarios; it also enables the processing of multi-dimensional sensor measurement data which might be received at a specific arbitrary location.

In a one embodiment, the computer implemented method further comprises an inversion of the kernel matrix of the data set of fixed locations stored in a further data structure.

The computer implemented method processes also an inversion of the kernel matrix of the data set of fixed locations. This inversion has a computational complexity of $O(s^3)$ where s is the size of the data set. As long as the fixed locations are not changed, this inversion has to be calculated only once and can be stored in the further data structure for a later recursive processing of the computer implemented method by a processor. For a first iteration of the computer implemented method the resulting computational effort is, therefore, $O(s^3 + s^2n)$, wherein s typically is s << n. In a typical scenario sensor measurement data arrives sequentially. Therefore, the computer implemented method is executed by the processor each time when new sensor measurement data from specific arbitrary locations arrive. When the fixed locations are not changed and the inversion of the kernel matrix of the data set is stored in the further data structure, the resulting effort for the processor is reduced to $O(n)$ for s $<<$ n.

In another embodiment, the computer implemented method further comprises: calculating an initial mean vector and an initial covariance matrix by applying a given mean function on the data set of fixed locations and by applying the data set with itself on the covariance function.

Initially, sensor measurement data of the spatio-temporal phenomenon for fixed locations might not be available. This might be, for example, because the uniformly distributed fixed locations might not all be accessible for the purpose of receiving sensor measurement data. Advantageously, the invention allows initializing the mean vector and the covariance matrix without prior knowledge. This is achieved by initializing a covariance matrix with the covariance function being evaluated at all fixed locations. In other words, the data set of fixed locations is applied with itself on the covariance function, which means that maximum uncertainty is assigned to the fixed locations of the covariance matrix. Furthermore, the GP allows the mean vector to be initialized by evaluating a given mean function at the fixed locations. For example, it is possible to use the zero mean function. Or, if some knowledge apart from sensor measurements data is available, for example, that during rush-hour traffic the CO pollution is higher than at other times, this knowledge can also be used for initialization of the mean vector. When receiving measurement data from specific arbitrary locations, the information provided by the measurement is incorporated into this mean vector and this covariance matrix which improves the estimates.

In an alternative embodiment, the specific arbitrary location of the at least one sensor node has changed over time. In the case that one of the sensor nodes out of the plurality of sensor nodes changes its location over time, for example, because the sensor node is located in a smartphone, the computer implemented method can still process the received measurement data from the changing locations. This is possible, because the update of the mean vector and the covariance matrix does not require measurement data from steady specific arbitrary locations; it can process measurement data from any location, since the GP includes a continuous description of the spatio-temporal phenomenon at any location. Therefore, advantageously, for example, a mobile sensor node can be utilized for collecting measurement data which is then being processed by a processor.

In an alternative embodiment, the computer implemented method further includes: deriving estimation data of the spatio-temporal phenomenon for arbitrary locations at the physical area from the mean vector and the covariance matrix, wherein at least one arbitrary location lacks measurement data; and generating a notification dependent on the estimated data. This aspect of the invention allows estimations of the spatio-temporal phenomenon at arbitrary locations, that is, interpolation of locations in the area and also extrapolation outside the area. For example, a heat map visualizing the spatio-temporal phenomenon can be generated which can be interpreted by a human. A heat map is a graphical representation of data where the individual values contained in a matrix are represented as colors or graphical patterns/ structures. Another example can be a warning signal which might be transmitted by audio frequency equipment in order to warn people in a specific area in a city where dangerous air pollution might have been built up; or a computer signal which might trigger an action at another computer system, for example, an alarm at the fire department which then evacuates the people within the hazardous zone.

Embodiments of the invention can be implemented as a computer program product and a computer system. The computer system can run the computer program product to execute the method.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 shows a system for a recursive space-time regression based on GPs according to one embodiment of the invention.

FIG. 2 is an exemplary flow chart according to one embodiment of the computer implemented method of the invention.

FIG. 3 illustrates plots for an exemplary recursive regression processing of a GP for sequentially arriving measurement data sets.

FIG. 4 shows an illustration of the locations of a movable sensor node in a physical area.

FIG. 5 shows an exemplary interpolation of a physical area for an illustration of a heat map.

The figures are non-scaled drawings. The sizes of the pictograms, such as physical area and the system components, are only symbolically and should not be mistaken to be aligned with each other.

### Detailed Description

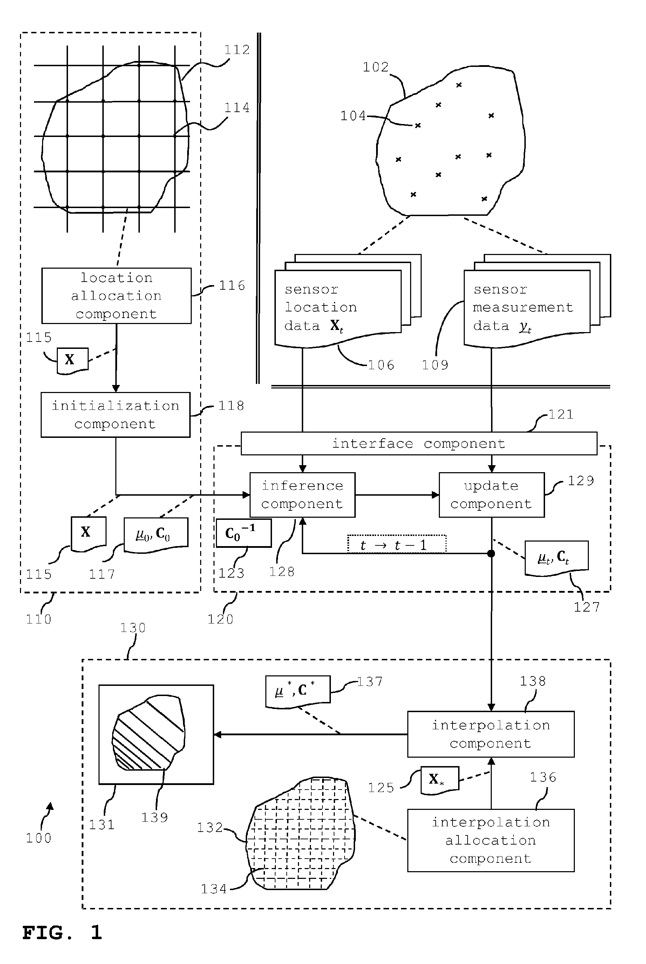

FIG. 1 shows an overview of one embodiment of the invention that includes computer system 100 and a plurality of sensor nodes in physical area 102. In FIG. 1, both, the computer system 100 and the area, are depicted. The computer system and the area are illustratively separated by the vertical and horizontal double-solid lines. Furthermore, computer system 100 can be distinguished into initialization part 110, update part 120, and presentation part 130.

Physical area 102 is covered by at least one sensor node out of a plurality of sensor nodes. A sensor node can be placed within the area or be directed at the area, such as for measuring luminous intensity of light sources. A sensor node is a hardware, which includes at least one measurement unit for measuring a specific phenomenon type of a spatio-temporal phenomenon. The measurement data may be raw data measured by the respective sensor node. Measurement data 109 may be measurements of one sensor node or the measurements of a part or all sensor nodes out of the plurality of sensor nodes. Measurement data 109 can be seen as a data set taken at a specific time. Thus, at different time instances different measurements can be available. In FIG. 1, having measurement data 109 at different time instances is illustrated by the stacked document symbol. At different time instances measurement data 109 may have the measurements from all sensor nodes, or may miss measurements from at least one sensor node or a sensor measurement unit of a sensor node; also including measurements from new sensor nodes or measurement units can be possible. Measurement data 109 may be directly communicate to the computer system via interface 121 or may be, for example, relayed by other network nodes to the computer system. Communication structures of a network might be used for the data transmission.

Measurement data 109 may have associated sensor location data 106 of the respective locations of the sensor nodes. A sensor node can be placed at arbitrary locations at physical area 102. The plurality of sensor nodes can be uniformly distributed across physical area 102. However, also other distributions across physical area 102 can be possible to serve optimized sensor measuring of the spatio-temporal phenomenon. A spatio-temporal phenomenon is often Gaussian distributed, thus, a uniformly allocated sensor node network might provide optimized results. Furthermore, locations of sensor nodes might change during any two time instances, or, a sensor node might not provide measurements, which means that there is no measurement data from the respective location available. The data sets of sensor location data 106 at different time instances is illustrated in FIG. 1 by the stacked document symbol.

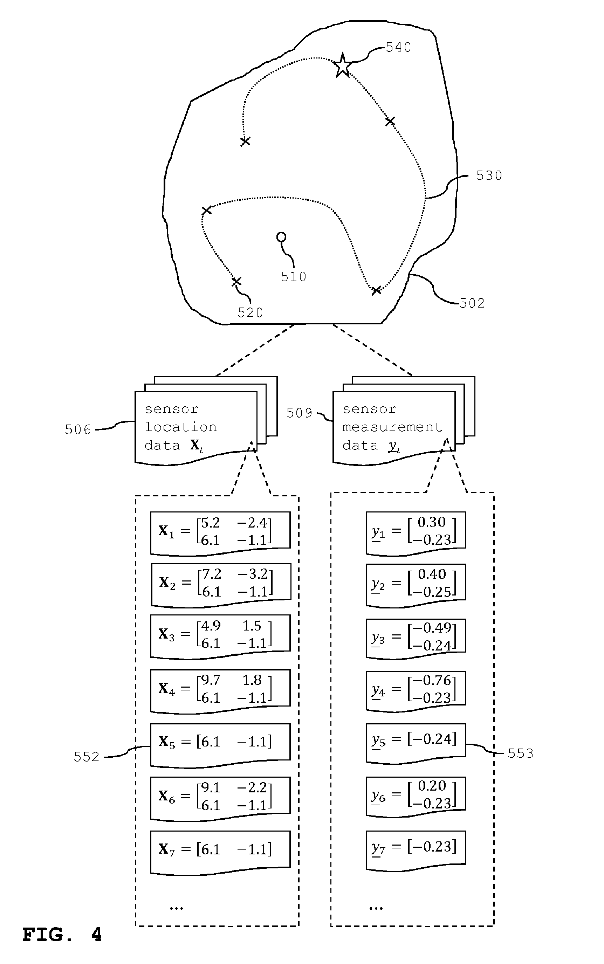

FIG. 4 shows an example of a movable sensor node 520 in physical area 502 at different time instances. In physical area 502 is also non-moving sensor node 510. Route 530 of movable sensor node 520 is illustrated by the curved dotted line; the crosses on route 530 illustrate time instances when movable sensor node 520 is transmitting or polled for measurement data and location data. Route 530 has not to be known. In this example, movable sensor node 520 and non-moving sensor node 510 provide their respective measurements, that is, sensor location data 506 and sensor measurement data 509, at the same time instances. In the example, the location data matrix $\mathbf{X}_t$ at time instance t includes the location data of the movable sensor 520 in the first row, whereas the location data of the static sensor 510 are included in the second row. The movable sensor node 510 lacks providing data at time instance t = 5 when it is at location 540; the corresponding sensor location data 552 and sensor measurement data 553 has no information about movable sensor node 520. Moreover, movable sensor node 520 stops measuring after time instance t = 6, thus, in this example, starting at time instance t = 7 only data from non-movable sensor node 510 is available. The number values used in FIG. 4 are only exemplary and do not represent actual correct values.

Returning back to FIG. 1, initialization part 110 of the computer system 100 includes location allocation component 116 and initialization component 118. Location allocation component 116 has information about physical area 102 and can allocate fixed locations 114 across a representation 112 of physical area 102. The allocation of fixed locations 114 can be uniformly distributed or in any other pattern. For GP Regression typically uniformly distributed location points, for example, in a gutter pattern, serve for calculating optimized values. Fixed locations 114 and sensor node locations 104 do not need to be identical, but can be identical. Furthermore, there is no need to have sensor nodes at any fixed location 114, nor are initial measurement values of the respective spatio-temporal phenomenon type required. Therefore, a plurality of mobile sensor nodes even without any static, non-moving sensor node in area 102 are sufficient for training the GP in $O(n)$.

Location allocation component 116 provides data set 115 of fixed locations 114 to initialization component 118. Data set 115 of fixed locations can also be obtained from other sources than a location allocation component, for example, by using the information about an existing network of sensor nodes. Data set 115 can be implemented as a matrix, wherein each fixed location can be represented by a location vector. In this example, no measurement values for fixed locations 114 are available. Initialization component 118 calculates an initial covariance matrix $\mathbf{C_0}$ from the data set 115 of fixed locations, also called a kernel matrix, and an initial mean vector $\mu_0$. Calculating the initial mean vector $\mu_0$ without information about measurements from the fixed locations can be achieved by, for example, using the zero mean function. Also other mean functions can be used. The initial covariance matrix $\mathbf{C}_0$ and mean vector $\mu_0$ are stored in data structure 117.

Data structure 117 and data set 115 of fixed locations are further processed in the update part 120 of computer system 100. Update part 120 includes inference component 128, update component 129, interface component 121, and memory module 123. Inference component 128 receives data structure 117 from initialization component 118 and sensor location data 106 for a specific time instance, for example, t = 1, via interface component 121. It then infers an intermediary covariance matrix from the data set of fixed locations 115 and the data set of sensor location data 106, as well as an intermediary mean vector based on the initial mean vector $\mu_0$ and sensor location data 106. Then, update component 129 receives the intermediary covariance matrix and the intermediary mean vector from inference component 128. Furthermore, it receives sensor measurement data 109 for the same specific time instance via interface component 121. Based on this input, update component 129 updates the initial covariance matrix $\mathbf{C}_0$ and the initial mean vector $\mu_0$ to the resulting data structure 127. Data structure 127 is an update of the initial values, thus, it replaces these values and holds the information of sensor measurement data 109 at sensor locations 106. Therefore, the current information about sensor locations and sensor measurement data 109 can be discarded.

When new sensor measurement data 109 from the same or different sensor locations become available, data structure 127 can recursively serve as input for the update round of the covariance matrix $\mathbf{C}_t$ and mean vector $\mu_t$ at this new time instance t.

The update of data structure 117, 127 requires an inversion of the kernel matrix $\mathbf{C}_0$. An inversion of a matrix has the computational complexity of $O(s^3)$, where $s$ is the number of fixed locations. Since the fixed locations do not change during the update cycles the inversion may be stored in memory module 123 to reduce computational effort of the processor.

Data structure 127 can be further processed in the presentation part 130 of computer system 100. Presentation part 130 includes interpolation allocation component 136, interpolation component 138, and presentation component 131. Interpolation allocation component 136 can be used to determine data set 125 of interpolation locations 134 according to the respective notification task. For example, if a visual illustration of a spatio-temporal phenomenon should be shown on a smartphone screen, less interpolation locations 134 might be required than on a 24-inch computer screen. Interpolation allocation component 136 has - similar to location allocation component 116 - information about physical area 102 and can, for example, uniformly allocate interpolation locations 134 on representation 132 of physical area 102. Interpolation locations 132 need not be identical with sensor locations 104 or fixed locations 114. Data set 125 of interpolation locations 134 can also be obtained from other sources than a dedicated interpolation allocation component, for example, it may be determined by the requirements of presentation component 131.

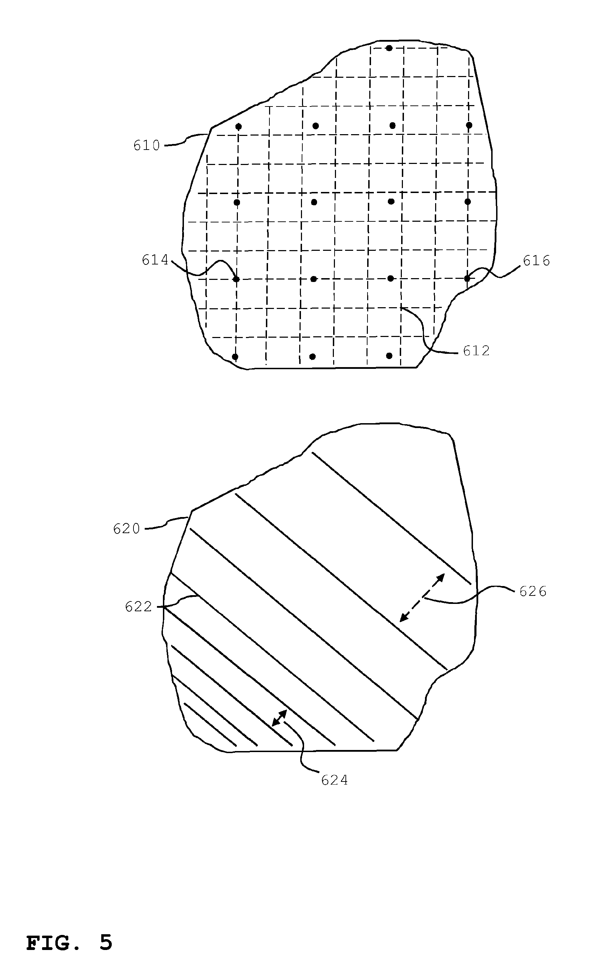

FIG. 5 shows an exemplary interpolation of a physical area for an illustration of a heat map. Representation 610 of the physical area has an overlaid grid 612. The intersections of grid 612, for example, can determine interpolation locations. The black dots in representation 610 of the physical area represent fixed locations. Fixed locations are not necessarily sensor node locations. Fixed locations and interpolation locations need no to be identical, however, they can be, for example at location 614, 616. Heat map 622 on the representation 620 of the physical area illustrates a distribution of a specific measurement type of the spatio-temporal phenomenon. The gaps between the solid lines on heat map 622 represent a high density 624 or low density 626 of the measurement type, respectively.

Returning back to Fig. 1, the respective heat map 622 from Fig. 5 is heat map 139 in Fig. 1. Heat map 139 is shown in presentation component 131. The values for the respective interpolation locations 134 on heat map 139 are obtained from interpolation component 138. Interpolation component 138 processes data set 125 of interpolation locations 134 with data structure 127 in order to estimate covariance matrix $\mathbf{C}^*$ and mean vector $\mu^*$. Interpolation component 138 can also use the inversion of the kernel matrix stored in memory module 123. Result 137 is used to generate the notification, in this example, heat map 139. Data structure 117, 127 is not identical with result 137: data structure 117, 127 is based on the number of fixed locations 114 whereas result 137 is based on the number of interpolation locations 134. Typically, the dimension (which is, in this example, based on number of locations, fixed locations, or interpolation locations) of result 137 is higher than the dimension of data structure 117, 127, because for an interpolation a much higher number of interpolation locations 134 are used to obtain an appropriate heat map 139.

Initialization component 118, inference component 128, and interpolation component 138 are based on the same calculations with the respective input data. The calculations also include the inversion of the kernel matrix of fixed locations 114. Since, in this example, fixed locations 114 do not change, the inversion can be used as if it is a constant. Thus, it is stored in memory module 123, as mentioned above, to reduce computational effort during the recursive update cycle or the interpolation.

In another embodiment, fixed locations 114 of the kernel matrix may have to be changed. A change may be required due to a spatial relocation of the spatio-temporal phenomenon, for example, in case wind influences the spatial gas allocation or the initial data set 115 of fixed locations 114 was not well chosen. Deleting existing or adding new fixed locations 114 does not necessarily result in a new calculation of the inversion of the kernel matrix. For example, given kernel matrix k(X,X), its inverse $k^{-1}$, and one new fixed location, results in a new kernel matrix

$$k' = \begin{bmatrix} k & q \\ q & s \end{bmatrix},$$

where $q$ and $s$ are calculated by means of the covariance function. The inverse of k' can be, for example, calculated by re-using the inverse $k^{-1}$ of k by exploiting either the Schur complement or the rank-one update. This results in a quadratic computational complexity instead of the cubic complexity of a full inversion of the kernel matrix. The person skilled in the art can apply this calculation for adding and deleting fixed locations 114 in order to avoid a anew calculation of the inversion of the kernel matrix in $O(s^3)$ where s is the number of fixed locations 114.

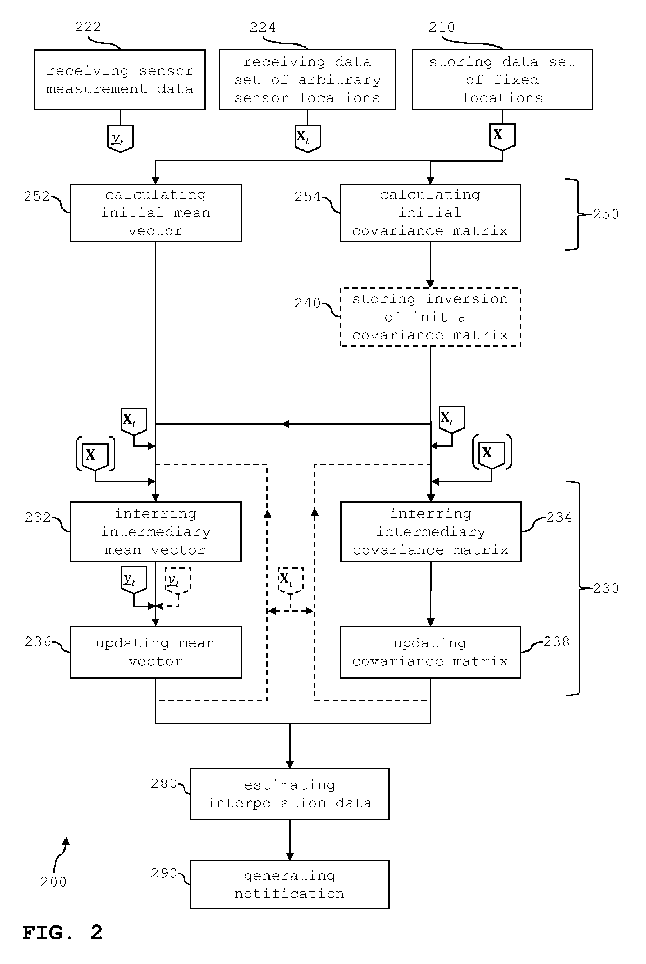

Fig. 2 is an exemplary flow chart of a computer implemented method 200 according to one embodiment of the invention for updating data structure 117, 127 (cf. Fig. 1) reflecting a spatio-temporal phenomenon in a physical area 102 (cf. Fig. 1), wherein the spatio-temporal phenomenon is estimated at any location of the physical area by a Gaussian Process with a mean function and a covariance function. The method starts with storing 210 a data set that is adapted to represent fixed locations of the physical area, wherein the data set has a mean vector and a covariance matrix according to the Gaussian Process, and wherein the data structure includes the mean vector and the covariance matrix. The method further includes receiving 222 sensor measurement data 109 (cf. Fig. 1) of the spatio-temporal phenomenon from at least one sensor node (cf. Fig. 1) and receiving 224 a corresponding data set 106 (cf. Fig. 1) of specific arbitrary sensor locations 104 of that sensor node located in the physical area 102 (cf. Fig. 1).

The output data in step 210, 222, and 224 of computer implemented method 200 is illustrated by a corresponding reference placeholder, that is, $\underline{y}_t$, $\mathbf{X}_t$, and $\mathbf{X}$, respectively. The reference placeholder for an output data can be input data at another position in the exemplary flow chart. This illustration is used in order to simplify the flow chart.

In this embodiment, the data set of fixed locations and the data set of specific arbitrary locations are different; there are no sensor nodes located at the locations that are represented by the data set of fixed locations and no measurement data is available. In other embodiments the locations can be identical and sensor measurement data may be available.

Method 200 proceeds with initialization 250 which includes calculating 252 an initial mean vector and calculating 254 and initial covariance matrix. The initial mean vector is calculated 252 by applying a mean function, for example, the zero mean function, on the data set of fixed locations $\mathbf{X}$. This can be achieved without having information about any measurement data, since the spatio-temporal phenomenon is assumed to be Gaussian distributed. Further, the initial covariance matrix is calculated 254; this is the kernel matrix. In other words, the data set of fixed locations $\mathbf{X}$ is applied with itself on the covariance function. This mean vector and this covariance matrix are included in data structure 117, 127 (cf. Fig. 1). In other embodiments, calculating the initial mean vector may be done with existing measurement data.

At initialization 250, merging 230, and interpolation 280 calculating an inversion of the kernel matrix is required (cf. formulas (16), (22)). The calculation of an inversion requires the computational effort $O(s^3)$, where s is the number of fixed locations. The number of fixed locations is constant for as long as no new fixed location is added to the data set of fixed locations or a fixed location is deleted from the data set. Therefore, optionally storing 240 the inversion of the kernel matrix in a further data structure, for example, memory module 123 (cf. Fig. 1), reduces the overall computing time of a processor when executing method 200. This optional method step is indicated in Fig. 2 by the dashed box for storing step 240.

Merging 230 includes inferring 232 an intermediary mean vector and inferring 234 an intermediary covariance matrix, as well as, updating 236 the initial mean vector and updating 238 the initial covariance matrix, which means, updating data structure 117, 127 (cf. Fig. 1) by incorporating the intermediary mean vector and sensor measurement data $\underline{y}_t$ into the initial mean vector, and the intermediary covariance matrix into the initial covariance matrix. Inferring 232, 234 (cf. formulas (16) to (18)) and updating 236, 238 (cf. formulas (19) to (21)) is based on the specific arbitrary locations $\mathbf{X}_t$ and the data set of fixed locations $\mathbf{X}$. In Fig. 2 this is indicated by the respective reference placeholder for $\mathbf{X}$ and $\mathbf{X}_t$ as input for inferring 232, 234; X is illustrated in brackets, because it might be provided by the preceding step or by, for example, a direct input link from storing 210 the data set of fixed locations. Sensor measurement data $\underline{y}_t$ is input data for updating 236 the initial mean vector.

After updating 236, 238, the current sensor measurement data $\underline{y}_t$ and the corresponding sensor location data $\mathbf{X}_t$ can be discarded, since the information which is represented by them is incorporated into data structure 117, 127 (cf. Fig. 1); executing method 200 with new sensor measurement data at the same or at other sensor node locations can be done without historic data of former measurements.

Upon arrival of new sensor measurement data and the respective sensor node location data, merging 230 can recursively incorporate this information into the mean vector and the covariance matrix. In Fig. 2, the dashed arrows indicate the iterative step and the dashed reference placeholder for $\underline{y}_t$ and $\mathbf{X}_t$ indicate the input data for the respective method step. Such iteration does not require historic sensor measurement data; it does require the data set of fixed locations $\mathbf{X}$ and optionally the inversion stored at step 240 in order to reduce processing effort of the processor.

The notion "initial" in the description above indicates the first iteration of updating data structure 117 (cf. Fig. 1). In following iterations an initialization of data structure 117, 127 might not be required; the iterations update the same data structure 117, 127 (cf. Fig. 1). Therefore, it is obvious that "initial mean vector"/ "initial covariance matrix" and "mean vector"/ "covariance matrix" relate to the same data structure 117, 127.

Merging 230 the specific arbitrary locations and the received measurement data into the data structure as described is achieved with exact recursive Bayesian regression. Thus, exact results are obtained, because method 200 is based on the Bayes theorem and does not utilize any approximations, for example, heuristics (see also the context of the description of formula (4)).

Upon the first availability of the mean vector and the covariance matrix, method 200 can proceed with deriving 280 estimation data of the spatio-temporal phenomenon for arbitrary locations at the physical area. This interpolation can be performed at any location, as illustrated by formulas (22) to (24); it is not necessary to have measurement data at locations. The estimated interpolation data can be used to generate 290 a notification dependent on this data. Such a notification can be, for example, a visual representation of the spatio-temporal phenomenon.

Further details of the computer implemented method according to an embodiment of the invention are described in the following. For the detailed illustration the following notations are used:

- underlined lower case letters like $\underline{x}$ denote column vectors
- bold upper-case letters like $\mathbf{X}$ are matrices
- the index $x_{1:t}$ indicates the collection of all variables $x_1, x_2, ..., x_t$
- $f(\mathbf{X})$ and $g(\mathbf{X},\mathbf{X})$ are shortcuts for simultaneously applying the functions $f(\underline{x})$ and

$g(\underline{x},\underline{y})$ to each column $\underline{x}_i, i = 1, ..., n$ of $\mathbf{X}$, i.e., $f(\mathbf{X})$ is a vector with elements $f(\underline{x}_i)$ and $g(\mathbf{X},\mathbf{X})$ is a matrix with elements $g(x_i, y_j)$

For GP Regression, it is assumed that a set of data $D = \{(\underline{x}_1,y_1), (\underline{x}_2,y_2), ..., (\underline{x}_n,y_n)\}$ is drawn from the noisy process

$$y_i = g\left(\underline{x}_i\right) + \epsilon ,$$

where $\underline{x}_i \in \mathbb{R}^d$ are the inputs, $y_j \in \mathbb{R}$ are the observations or outputs, and $\epsilon \sim N(0, \sigma_2)$ is zero-mean Gaussian noise with variance $\sigma^2$. In the following, $\mathbf{X}_D = [\underline{x}_1, ...,\underline{x}_n]$ are inputs and $\underline{y} = [y_1, ..., y_n]^T$ are the corresponding observations.

As known in the art, a GP is used to infer the latent function $g(\cdot)$ from the data $D$. The GP is completely defined by a mean function $m(\underline{x}) \triangleq E\{g(\underline{x})\}$, which specifies the expected output value, and a positive semidefinite covariance function $k(\underline{x},\underline{x}') \triangleq cov\{g(\underline{x}),g(x')\}$, which specifies the covariance between pairs of inputs and is often called a kernel. Typical examples are the zero mean function and the squared exponential (SE) kernel

$$m\left(\underline{x}\right) = 0, \quad k\left(\underline{x},\underline{x}'\right) = \alpha^2 \cdot \exp\left(-\frac{1}{2}(\underline{x} - \underline{x}')^T \mathbf{\Lambda}^{-1}\left(\underline{x} - \underline{x}'\right)\right) , \quad (1)$$

respectively, however, the approach used by embodiments of the invention holds for arbitrary mean and covariance functions. In formula (1), $\mathbf{\Lambda}$ is a diagonal matrix of the characteristic length-scales for each input dimension and $\alpha^2$ is the variance of the latent function h. Such parameters of the mean and covariance functions together with the noise variance $\sigma^2$ are called the hyper-parameters of the GP. For this illustration, it is assumed that the hyper-parameters are given and thus, need not to be learned from data.

As a GP forms a Gaussian distribution over function, it can be written as $(\underline{x}) \sim GP(m(\underline{x}), k(\underline{x},\underline{x}'))$. For any finite set of inputs, the resulting distribution of the outputs is a multivariate Gaussian. For example, the distribution of the function value $g_* = g(\underline{x}_*)$ for an arbitrary test input $\underline{x}_*$ is a univariate Gaussian with mean and variance

$$\mu_g(\underline{x}_*) = E\{g_*\} = m_* + \underline{k}_*^{\mathrm{T}} \mathbf{K}_x^{-1}(\underline{y} - \underline{m}) , \quad (2)$$

$$\sigma_g^2(\underline{x}_*) = \mathrm{var}\{g_*\} = k_{**} - \underline{k}_*^{\mathrm{T}} \mathbf{K}_x^{-1} \underline{k}_* , \quad (3)$$

respectively. Here, $var(\cdot)$ is the variance, $\mathbf{K}_x \triangleq \mathbf{K} + \sigma^2\mathbf{I}$, $m_* \triangleq m(\underline{x}_*)$, $\underline{m} \triangleq m(\mathbf{X}_D)$, $\underline{k}_* \triangleq k(\mathbf{X}_D,\underline{x}_*)$, $k_{**} \triangleq k(\underline{x}_*,\underline{x}_*)$, and $\mathbf{K} \triangleq k(\mathbf{X}_D,\mathbf{X}_D)$ is the kernel matrix.

For GP prediction, i.e., for calculating the distribution for a given set of test inputs according to (2) and (3), it is necessary to calculate the kernel matrix $\mathbf{K}$, to invert the matrix $\mathbf{K}_x$, and to multiply $\mathbf{K}_x$ with $\underline{k}_*$. Both, the kernel matrix calculation and the multiplication scale with the computational effort $O(n^2)$, while the inversion scales with $O(n^3)$. Thus, for large data sets $D$, storing the kernel matrix and solving all calculations is prohibitive. The invention uses a recursive GP regression for all calculations on a set of $s << n$ so-called basis vectors in order to perform an approximate but computationally efficient regression.

For the recursive GP regression, let $\mathbf{X} \triangleq [\underline{x}_1,\underline{x}_2,...,\underline{x}_s]$ be the matrix of the locations of the basis vectors, wherein $\mathbf{X}$ is not a subset of $\mathbf{X}_D$, and $\underline{g} \triangleq g(\mathbf{X})$ the corresponding unknown values of the latent function. It is assumed that the basis vectors remain fixed for all processing steps $t = 0,1, ...$ Since $g(\underline{x})$ is assumed to be a GP, the distribution

$$p_0\left(\underline{g}\right) = N\left(\underline{g};\underline{\mu}_0^g,\mathbf{C}_0^g\right)$$ of $\underline{g}$ at the initial step $t = 0$ of the recursive processing is Gaussian with mean

$\underline{\mu}_0^g \triangleq m(\mathbf{X})$ and covariance $\mathbf{C}_0^g \triangleq k(\mathbf{X},\mathbf{X})$. At an arbitrary step $t > 0$ new observations $\underline{y}_t = [y_{t,1},y_{t,2},\cdots,y_{t,nt}]^T$ at inputs $\mathbf{X}_t = [\underline{x}_{t,1},\underline{x}_{t,2}, ...x_{t,nt}]$ become available. The goal is now to calculate the posterior distribution $p_t(\underline{g}|\underline{y}_{1:t})$ by means of updating the prior distribution

$$p_{t-1} \triangleq p_{t-1}\left(\underline{g}|\underline{y}_{1:t-1}\right) = N\left(\underline{g};\underline{\mu}_{t-1}^g,\mathbf{C}_{t-1}^g\right)$$

of $\underline{g}$ of the previous step $t$ - 1 with the new observations $\underline{y}_t$.
For deriving a recursive algorithm, the desired posterior distribution is expanded according to

$$p_t = \int p_t\left(\underline{g},\underline{g}_t|\underline{y}_{1:t}\right) \mathrm{d}\underline{g}_t = c_t \int p_t\left(\underline{y}_t|\underline{g},\underline{g}_t\right) \cdot p_{t-1}\left(\underline{g},\underline{g}_t|\underline{y}_{1:t-1}\right) \mathrm{d}\underline{g}_t \quad , \qquad (4)$$

where the first equality results from integrating out $\underline{g}_t \triangleq g(\mathbf{X}_t)$ from the joint distribution $p_t(\underline{g},\underline{g}|\underline{y}_{1:t})\cdot$ The second equality follows from applying Bayes' law, where $c_t$ is a normalization constant. Based on formula (4), calculating the posterior distribution can be performed in two steps:

- Inference Calculating the joint prior $p_{t-1}$ ($\underline{g},\underline{g}|\underline{y}_{1:t-1}$) based on the given prior $p_{t-1}$,
- Update Updating the joint prior with the observations $\underline{y}_t$ and integrating our $\underline{g}_t$ For the description of the inference and update step the following Lemmas are applied.

Lemma 1 (Combination of Quadratic Forms)

If $\mathbf{B}$ and $\mathbf{C}$ are symmetric and positive definite matrices, then

$$(\underline{a} - \mathbf{A}\underline{x})^{\mathrm{T}} \mathbf{B}^{-1} (\underline{a} - \mathbf{A}\underline{x}) + (\underline{b} - \underline{x})^{\mathrm{T}} \mathbf{C}^{-1} (\underline{b} - \underline{x}) = (\underline{x} - \underline{y})^{\mathrm{T}} \mathbf{D}^{-1} (\underline{x} - \underline{y}) + r \quad ,$$

where

$$\underline{y} = \underline{b} + \mathbf{D}\mathbf{A}^{\mathrm{T}}\mathbf{B}^{-1} (\underline{a} - \mathbf{A}\underline{b}) \,,$$
$$\mathbf{D}^{-1} = \mathbf{A}^{\mathrm{T}}\mathbf{B}^{-1}\mathbf{A} + \mathbf{C}^{-1} \,,$$
$$r = (\underline{a} - \mathbf{A}\underline{b})^{\mathrm{T}} \left(\mathbf{B} + \mathbf{A}\mathbf{C}\mathbf{A}^{\mathrm{T}}\right)^{-1} (\underline{a} - \mathbf{A}\underline{b}) \,.$$

Lemma 2 (Inversion of Block Matrices)

If $\mathbf{A}$ and $\mathbf{D}$ are regular matrices, then

$$M^{-1} = \begin{bmatrix} A & U \\ V & D \end{bmatrix}^{-1} = \begin{bmatrix} A^{-1} + A^{-1}UQ^{-1}VA^{-1} & -A^{-1}UQ^{-1} \\ -Q^{-1}VA^{-1} & Q^{-1} \end{bmatrix} ,$$

where $Q = D - VA^{-1}U$ is the Schur complement of the block matrix $M$. Furthermore, the determinant $|\cdot|$ of the matrix $M$ is

$$|M| = |A| \cdot |Q| . \qquad (5)$$

Further information on the correctness of Lemma 1 and Lemma 2 can be found, for example, at:

- A.4, pp. 261-262 in D. J. Salmond, "Tracking in Uncertain Environments," Ph.D. dissertation, Royal Aerospace Establishment, Farnborough, Hants, UK, 1989.
- W. J. Duncan, "Some devices for the solution of large sets of simulations linear equations," Philosophical Magazine Series 7, vol. 35, no.249, pp. 660-670, 1944.

First, the derivation of the inference step is described. In order to determine the joint prior $p_{t-1}(\underline{g},\underline{g}_t|\underline{y}_{1:t-1})$ it is to mention that the (initial) joint distribution $p_0(g,g_t)$ is Gaussian with mean and covariance

$$\underline{\mu}_0 = \begin{bmatrix} m(X) \\ m(X_t) \end{bmatrix} \quad \text{and} \quad C_0 = \begin{bmatrix} k(X,X) & k(X,X_t) \\ k(X_t,X) & k(X_t,X_t) \end{bmatrix} ,$$

respectively. This follows from the fact that $g(\cdot)$ is a GP and any finite representation of this GP yields a Gaussian distribution. Thus, the joint prior can be written as

$$p_{t-1}\left(\underline{g},\underline{g}_t|\underline{y}_{1:t-1}\right) = p(\underline{g}_t|\underline{g}) \cdot p_{t-1} = \mathcal{N}\left(\underline{g}_t;\underline{\mu}_t^p,B\right) \cdot \mathcal{N}\left(\underline{g};\underline{\mu}_{t-1}^g,C_{t-1}^g\right) , \qquad (6)$$

with

$$\underline{\mu}_t^p = m(X_t) + J_t \cdot \left(\underline{\mu}_{t-1}^g - m(X)\right) ,$$
$$B = k(X_t,X_t) - J_t \cdot k(X,X_t) ,$$
$$J_t = k(X_t,X) \cdot k(X,X)^{-1} .$$

The first equality in formula (6) follows from assuming that $\underline{g}_t$ is conditionally independent of the past observations $\underline{y}_{1:t-1}$ given $\underline{g}$. Hence, the conditional distribution $p(\underline{g}_t|\underline{g})$ is Gaussian and results from the joint distribution $p_0(\underline{g}_t,\underline{g})$ by conditioning on $\underline{g}$ (see for example Chapter 2.6 in A.H. Jazwinski, Stochastic Processes and Filtering Theory. Dover Publications, inc., 2007).
For solving the product in formula (6), at first the exponential functions of both Gaussians are considered. By defining $\underline{f} \triangleq \underline{g}_t - m(X_t) + Jt \cdot m(X)$ and utilizing the result of Lemma 1, the sum of both exponents can be transformed into

$$-\tfrac{1}{2}\left(\left(\underline{f} - J_t \cdot \underline{g}\right)^{\mathrm{T}} B^{-1}\left(\underline{f} - J_t \cdot \underline{g}\right) + \left(\underline{g} - \underline{\mu}_{t-1}^g\right)\left(C_{t-1}^g\right)^{-1}\left(\underline{g} - \underline{\mu}_{t-1}^g\right)\right) =$$
$$-\tfrac{1}{2}\left(\left(\underline{g} - \underline{d}\right)^{\mathrm{T}} D^{-1}\left(\underline{g} - \underline{d}\right) + \underbrace{\left(\underline{f} - J_t \cdot \underline{\mu}_{t-1}^g\right)}_{= \underline{g}_t - \underline{\mu}_t^p}\left(C_t^p\right)^{-1}\left(\underline{f} - J_t \cdot \underline{\mu}_{t-1}^g\right)\right) \qquad , \qquad (7)$$

with

$$\underline{d} \triangleq \underline{\mu}_{t-1}^g + \mathbf{D}\mathbf{J}_t^{\mathrm{T}}\mathbf{B}^{-1}\left(\underline{f} - \mathbf{J}_t \cdot \underline{\mu}_{t-1}^g\right) = \underline{\mu}_{t-1}^g + \mathbf{D}\mathbf{J}_t^{\mathrm{T}}\mathbf{B}^{-1}\left(\underline{g}_t - \underline{\mu}_t^p\right),$$

$$\mathbf{D}^{-1} \triangleq \mathbf{J}_t^{\mathrm{T}}\mathbf{B}^{-1}\mathbf{J}_t + \left(\mathbf{C}_{t-1}^g\right)^{-1},$$

$$\mathbf{C}_t^p \triangleq \mathbf{B} + \mathbf{J}_t\mathbf{C}_{t-1}^g\mathbf{J}_t^{\mathrm{T}}, \tag{8}$$

where $\underline{\mu}_t^p$ and $\mathbf{C}_t^p$ are the respective mean and covariance of $\underline{g}_t$. The inverse of formula (8) given by

$$\left(\mathbf{C}_t^p\right)^{-1} = \mathbf{B}^{-1} - \mathbf{B}^{-1}\mathbf{J}_t\mathbf{D}\mathbf{J}_t^{\mathrm{T}}\mathbf{B}^{-1} \tag{9}$$

results from applying the Woodbury formula, see for example in W.H. Press, S.A. Teukolsky, W.T. Vetterling, and B.P. Flannery, Numerical Recipes: The Art of Scientific Computing, 3rd ed., Cambridge University Press, 2007. By employing formula (9) together with algebraic transformations, formula (7) can be rearranged to

$$-\tfrac{1}{2}\left(\left(\underline{g} - \underline{d}\right)^{\mathrm{T}}\mathbf{D}^{-1}\left(\underline{g} - \underline{d}\right) + \left(\underline{g}_t - \underline{\mu}_t^p\right)^{\mathrm{T}}\mathbf{B}^{-1}\left(\underline{g}_t - \underline{\mu}_t^p\right) - \left(\underline{g}_t - \underline{\mu}_t^p\right)^{\mathrm{T}}\mathbf{B}^{-1}\mathbf{J}_t\mathbf{D}\mathbf{J}_t^{\mathrm{T}}\mathbf{B}^{-1}\left(\underline{g}_t - \underline{\mu}_t^p\right)\right)$$

$$= -\tfrac{1}{2}\left(\left(\underline{g} - \underline{\mu}_{t-1}^g\right)\mathbf{D}^{-1}\left(\underline{g} - \underline{\mu}_{t-1}^g\right) - 2\left(\underline{g} - \underline{\mu}_{t-1}^g\right)^{\mathrm{T}}\mathbf{J}_t^{\mathrm{T}}\mathbf{B}^{-1}\left(\underline{g}_t - \underline{\mu}_t^p\right) + \left(\underline{g}_t - \underline{\mu}_t^p\right)^{\mathrm{T}}\mathbf{B}^{-1}\left(\underline{g}_t - \underline{\mu}_t^p\right)\right).$$

The right-hand term corresponds to the exponent of a joint Gaussian of $\underline{g}$ and $\underline{g}_t$ with mean and (inverse) covariance

$$\underline{q} = \begin{bmatrix} \underline{\mu}_{t-1}^g \\ \underline{\mu}_t^p \end{bmatrix} \quad \text{and} \quad \mathbf{Q}^{-1} = \begin{bmatrix} \mathbf{D}^{-1} & -\mathbf{J}_t^{\mathrm{T}}\mathbf{B}^{-1} \\ -\mathbf{B}^{-1}\mathbf{J}_t & \mathbf{B}^{-1} \end{bmatrix} = \begin{bmatrix} \mathbf{C}_{t-1}^g & \mathbf{C}_{t-1}^g\mathbf{J}_t^{\mathrm{T}} \\ \mathbf{J}_t\mathbf{C}_{t-1}^g & \mathbf{C}_t^p \end{bmatrix}^{-1}, \tag{10}$$

respectively, where the covariance $\mathbf{Q}$ on the right-hand side of formula (10) is obtained from applying Lemma 2 on $\mathbf{Q}^{-1}$. Besides the exponential functions, the multiplication in formula (6) also comprises the product of the normalization factors of both Gaussians, which can be simplified according to

$$\frac{1}{\sqrt{|2\pi\mathbf{B}|}} \cdot \frac{1}{\sqrt{|2\pi\mathbf{C}_{t-1}^g|}} = \frac{1}{\sqrt{(2\pi)^{(n_t+m)} \cdot |\mathbf{B}| \cdot |\mathbf{C}_{t-1}^g|}}$$

$$\overset{(a)}{=} \frac{1}{\sqrt{(2\pi)^{(n_t+m)} \cdot |\mathbf{C}_{t-1}^g| \cdot \underbrace{|\mathbf{B} + \mathbf{J}_t\mathbf{C}_{t-1}^g\mathbf{J}_t^{\mathrm{T}} - \mathbf{J}_t\mathbf{C}_{t-1}^g\left(\mathbf{C}_{t-1}^g\right)^{-1}\mathbf{C}_{t-1}^g\mathbf{J}_t^{\mathrm{T}}|}_{= \mathbf{C}_t^p}}} \overset{(b)}{=} \frac{1}{\sqrt{|2\pi\mathbf{Q}|}},$$

where (a) results from adding the zero $\mathbf{J}_t\mathbf{C}_{t-1}^g\mathbf{J}_t^T - \mathbf{J}_t\mathbf{C}_{t-1}^g\mathbf{J}_t^T = 0$ and (b) from applying formula (5).

Next, the derivation of the update step is described. Given the result of the inference step that the joint prior in formula (6) is a Gaussian $N(\underline{q},\mathbf{Q})$, the next step is to perform the update and marginalization in formula (4). For this purpose, formula (4) is rearranged to

$$\overbrace{p_t = \int c_t \cdot p_t\left(\underline{y}_t|\underline{g}_t\right) \cdot \underbrace{p_{t-1}\left(\underline{g}_t|\underline{y}_{1:t-1}\right) \cdot p_{t-1}\left(\underline{g}|\underline{g}_t,\underline{y}_{1:t-1}\right)}_{= p_{t-1}\left(\underline{g},\underline{g}_t|\underline{y}_{1:t-1}\right)} \, \mathrm{d}\underline{g}_t} \qquad (11)$$

$$= p_t\left(\underline{g}_t|\underline{y}_{1:t}\right) \text{ (Kalman filter)}$$

by taking into account that $\underline{g}$ is not observed and thus, $p_t(\underline{y}_t|\underline{g}_t)$ is independent of $\underline{g}$. Since $p_t\left(\underline{y}_t|\underline{g}_t\right) = N\left(\underline{y}_t;\underline{g}_t,\sigma^2\mathbf{I}\right)$ and $p_{t-1}\left(\underline{g}_t|\underline{y}_{1:t-1}\right) = N\left(\underline{g}_t;\underline{\mu}_t^p,\mathbf{C}_t^p\right)$ are both Gaussian, $\underline{g}_t$ can be updated by means of a Kalman filter update step. Updating $\underline{g}$ and integrating out $\underline{g}_t$ is then preformed simultaneously.

Applying the Kalman filter update equations yields $\left(\underline{g}_t|\underline{y}_{1:t}\right) = N\left(\underline{g}_t;\underline{\mu}_t^e,\mathbf{C}_t^e\right)$ with mean and covariance

$$\underline{\mu}_t^e = \underline{\mu}_t^p + \mathbf{G}_t \cdot \left(\underline{y}_t - \underline{\mu}_t^p\right) \quad , \qquad (12)$$

$$\mathbf{C}_t^e = \mathbf{C}_t^p - \mathbf{G}_t\mathbf{C}_t^p \quad , \qquad (13)$$

respectively, where $\mathbf{G}_t = \mathbf{C}_t^p \cdot \left(\mathbf{C}_t^p + \sigma^2\mathbf{I}\right)^{-1}$ is the Kalman gain. The result of the manipulation of $p_t(\underline{g}_t|\underline{y}_{1:t})$ with $p_{t-1}$ $(\underline{g}|\underline{g}_t,\underline{y}_{1:t-1})$ in formula (11) can be derived similarly as described above for the inference step. This again gives a joint Gaussian distribution of $\underline{g}$ and $\underline{g}_t$ with mean and covariance

$$\underline{\mu}_t = \begin{bmatrix} \underline{\mu}_t^g \\ \underline{\mu}_t^e \end{bmatrix} \text{ and } \mathbf{C}_t = \begin{bmatrix} \mathbf{C}_t^g & \mathbf{L}_t\mathbf{C}_t^e \\ \mathbf{C}_t^e\mathbf{L}_t^{\mathrm{T}} & \mathbf{C}_t^e \end{bmatrix}$$

respectively, where

$$\underline{\mu}_t^g = \underline{\mu}_{t-1}^g + \mathbf{L}_t \cdot \left(\underline{\mu}_t^e - \underline{\mu}_t^p\right) \quad , \qquad (14)$$

$$\mathbf{C}_t^g = \mathbf{C}_{t-1}^g + \mathbf{L}_t \cdot \left(\mathbf{C}_t^e - \mathbf{C}_t^p\right) \cdot \mathbf{L}_t^{\mathrm{T}} \quad , \qquad (15)$$

$$\mathbf{L}_t = \mathbf{C}_{t-1}^g\mathbf{J}_t^{\mathrm{T}}\left(\mathbf{C}_t^p\right)^{-1} \quad .$$

Since we are only interested in obtaining the distribution $p_t = N\left(\underline{g};\underline{\mu}_t^g,\mathbf{C}_t^g\right)$, i.e., updating the latent function at the basis vectors **X** in order to keep the memory and computational complexity bounded over time, $\underline{g}_t$ is integrated out. This corresponds to neglecting the mean $\underline{\mu}_t^e$ and covariance $\mathbf{C}_t^e$ of $\underline{g}_t$ as well as the cross-covariance $\mathbf{L}_t\mathbf{C}_t^e$.

Therefore, in summary, at steps t = 1,2, ... the inventive method recursively processes measurement data $\underline{y}_t$ at the arbitrary sensor locations $\mathbf{X}_t$ by the following set of equations: (Inference)

$$\mathbf{J}_t = k(\mathbf{X}_t, \mathbf{X}) \cdot k(\mathbf{X}, \mathbf{X})^{-1} , \qquad (16) \qquad \text{(Gain)}$$

$$\underline{\mu}_t^p = m(\mathbf{X}_t) + \mathbf{J}_t \cdot \left( \underline{\mu}_{t-1}^g - m(\mathbf{X}) \right) , \qquad (17) \qquad \text{(Mean)}$$

$$\mathbf{C}_t^p = k(\mathbf{X}_t, \mathbf{X}_t) + \mathbf{J}_t \cdot \left( \mathbf{C}_{t-1}^g - k(\mathbf{X}, \mathbf{X}) \right) \cdot \mathbf{J}_t^{\mathrm{T}} , \qquad (18) \qquad \text{(Covariance)}$$

(Update)

$$\tilde{\mathbf{G}}_t = \mathbf{C}_{t-1}^g \mathbf{J}_t^{\mathrm{T}} \cdot \left( \mathbf{C}_t^p + \sigma^2 \mathbf{I} \right)^{-1} , \qquad (19) \qquad \text{(Gain)}$$

$$\underline{\mu}_t^g = \underline{\mu}_{t-1}^g + \tilde{\mathbf{G}}_t \cdot \left( \underline{y}_t - \underline{\mu}_t^p \right) , \qquad (20) \qquad \text{(Mean)}$$

$$\mathbf{C}_t^g = \mathbf{C}_{t-1}^g - \tilde{\mathbf{G}}_t \mathbf{J}_t \mathbf{C}_{t-1}^g , \qquad (21) \qquad \text{(Covariance)}$$

where the recursion commences from the initial mean $\underline{\mu}_0^g \triangleq m(\mathbf{X})$ and covariance $\mathbf{C}_0^g \triangleq k(\mathbf{X}, \mathbf{X})$ of $g$ for the basis vectors **X**. The updated mean in formula (20) and covariance in formula (21) follow from substituting $\underline{\mu}_t^e$ in formula (14) with formula (12) and substituting $\mathbf{C}_t^e$ in formula (15) with formula (13), respectively, with $\tilde{\mathbf{G}}_t = \mathbf{L}_t \cdot \mathbf{G}_t$.

In another embodiment, the updated data structure, that is mean $\underline{\mu}_t^g$ and covariance $\mathbf{C}_t^g$, can then be used for an interpolation at arbitrary locations $\mathbf{X}_*$. For the interpolation, the steps of the inference step can be used:

$$\mathbf{J}_* = k(\mathbf{X}_*, \mathbf{X}) \cdot k(\mathbf{X}, \mathbf{X})^{-1} , \qquad (22)$$

$$\underline{\mu}^* = m(\mathbf{X}_*) + \mathbf{J}_* \cdot \left( \underline{\mu}_t^g - m(\mathbf{X}) \right) , \qquad (23)$$

$$\mathbf{C}^* = k(\mathbf{X}_*, \mathbf{X}_*) + \mathbf{J}_* \cdot \left( \mathbf{C}_t^g - k(\mathbf{X}, \mathbf{X}) \right) \cdot \mathbf{J}_*^{\mathrm{T}} , \qquad (24)$$

The resulting mean $\mu^*$ and covariance $\mathbf{C}^*$ can then be used to generate, for example, a heat map for visual representation of the spatio-temporal phenomenon. Formula (22) to (24) are basically identical to formula (16) to (18) of the inference step; in this description it is separately illustrated for clarity reasons.

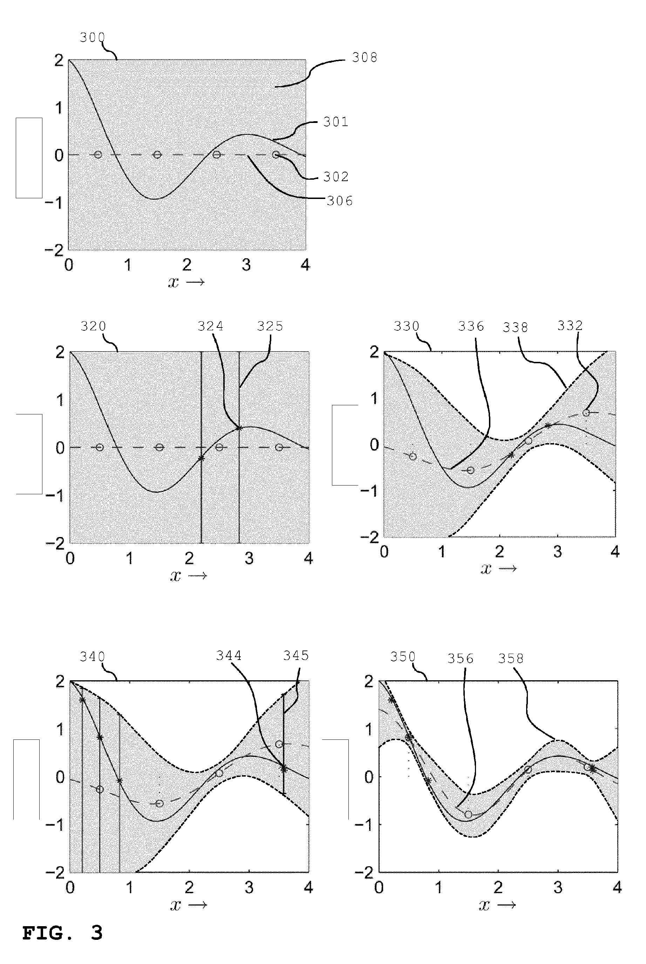

Fig. 3 shows plots of the update of the data structure for an exemplary one-dimensional spatio-temporal phenomenon during two sensor data measurements without any prior sensor measurement data. In other words, the plots illustrate the improvement of the estimates of mean $\underline{\mu}_t^g$ and covariance $\mathbf{C}_t^g$ between two sets of sensor measurement data when there was no prior sensor measurement data available.

Looking at the plots, the phenomenon is given by the ordinate axis, and the location is given by the abscissa axis. Graph 301 is the real but unknown function of the phenomenon. The gray section 308 indicates the variance of the estimates for GP 306. As the accuracy of the estimates is improving, the gray section approximates the real function from plot to plot.

The spatio-temporal phenomenon in this example is given by the nonlinear mapping

$$y = g(x) + \epsilon = 2 \cdot \exp\left(-\frac{x}{2}\right) \cdot \cos(2x) + \epsilon$$

where the noise $\epsilon \sim N(0, 0.1)$ is Gaussian with zero mean and variance 0.1. This function is assumed to be not known and has to be estimated from sensor measurements. In other words, there is no knowledge about the spatio-temporal phenomenon available.

The GP used for estimation, for example, has the zero mean function $m(x) = 0$ and the squared exponential covariance function $k(x, x') = \alpha^2 \cdot \exp\left(-\frac{1}{2l}(x - x')^2\right)$ with hyper-parameters $\alpha$ = 1 and $l$ = 1.

In the example, the fixed locations are equidistantly placed on the interval [0,4] with the four basis scalars at $x_1$ = 0.5, $x_2$ = 1.5, $x_3$ = 2.5, $x_4$ = 3.5 and, thus, the matrix of all basis scalars is $\mathbf{X}$ = [0.5 1.5 2.5 3.5]$^T$. The dimension of the fixed locations can be of higher a higher value. Therefore, in other embodiments, the fixed locations might be represented by basis vectors.

For the initialization of the computer implemented method, the mean and covariance at time step $t$ = 0 are

$$\underline{\mu}_0^g = m(\mathbf{X}) = [0\ 0\ 0\ 0]^T$$

$$\mathbf{C}_0^g = k(\mathbf{X}, \mathbf{X}) = \begin{bmatrix} 1 & 0.605 & 0.135 & 0.011 \\ 0.605 & 1 & 0.605 & 0.135 \\ 0.135 & 0.605 & 1 & 0.605 \\ 0.011 & 0.135 & 0.605 & 1 \end{bmatrix}$$

Furthermore, the inverse required for $J_0$ is calculated by inverting $\mathbf{C}_0^g$. This inversion has to be performed only once. That means, the result can be stored and reused in all subsequent steps of the method, which reduces the overall computational load.

The GP of the spatio-temporal phenomenon can be visualized by interpolating arbitrary points on the interval [0,4], for example, 50 equidistant points. These interpolation points can be stored in a matrix $\mathbf{X}_* = [x_1 x_2 ... x_{50}]^T$. By applying formula (22) to (24) with $\mathbf{X}_*$, plot 300 with mean $\mu^*$ and covariance $C^*$ can be derived for time step $t$ = 0.

As mentioned, the spatio-temporal phenomenon is described by the unknown function 301 which is illustrated as a solid line. The current recursive GP 306 is illustrated as a dashed line, and the fixed locations, i.e., the basis scalars, with their mean values $\mu^*$ 302 as circles on GP 306. Since at this initial method step no measurement data is available, the estimate is zero everywhere. In other words, the fixed locations may all have zero mean. The 2sigma bound of a current estimate is illustrated by grey section 308, which covers plot 300 completely. The 2sigma bound is calculated by taking the square roots of diagonal elements of the covariance matrix $\mathbf{C}^*$ and then multiplying them with two, since it is the 2sigma bound.

At time step = 1 , two measurements at sensor node locations $x_{1,1}$ = 2.2 and $x_{1,2}$ = 2.83 are received. The resulting matrix for this example is $\mathbf{X}_1$ = [2.2 2.83]$^T$. The corresponding sensor measurement data is $y_{1,1}$ = -0.23 and $y_{1,2}$ = 0.4. Typically, the measurement data is noisy, that means, they do not exactly represent a value of the unknown function $g(x)$ at the respective sensor measurement locations due to the noise $\epsilon$.

The inference step of formulas (16) - (18) with matrix $\mathbf{X}_1 = [2.2 \; 2.83]^T$ gives

$$\mathbf{J}_1 = \begin{bmatrix} -0.086 & 0.345 & 0.8312 & -0.119 \\ 0.068 & -0.207 & 0.887 & 0.2898 \end{bmatrix}$$

$$\underline{\mu}_1^p = [0 \quad 0]^T$$

$$\mathbf{C}_1^p = \begin{bmatrix} 1 & 0.82 \\ 0.82 & 1 \end{bmatrix}$$

The result of this inference step can be seen in plot 320. The black stars corresponds to the sensor measurement data, for example, black star 324 to $y_{1,2} = 0.4$. The vertical bars indicate the 2sigma bound at the respective sensor measurement locations, for example, vertical bar 325 is the bound for $y_{1,2}$.

By applying formulas (19) - (21) on the results of the inference step the update of mean $\underline{\mu}_1^g$ and covariance $\mathbf{C}_1^g$ can be calculated:

$$\widetilde{\mathbf{G}}_1 = \begin{bmatrix} 0.527 & -0.362 \\ 1.3 & -0.648 \\ 0.548 & 0.491 \\ -0.636 & 1.309 \end{bmatrix}$$

$$\underline{\mu}_1^g = [-0.268 \; -0.563 \; 0.068 \; 0.671]^T$$

$$\mathbf{C}_1^g = \begin{bmatrix} 0.9 & 0.345 & -0.026 & 0.074 \\ 0.345 & 0.252 & -0.024 & 0.093 \\ -0.026 & -0.024 & 0.01 & -0.023 \\ 0.074 & 0.093 & -0.023 & 0.227 \end{bmatrix}$$

The result of the update step at time step t = 1 can be seen in plot 330. The mean value 332 of all basis scalars, i.e., of all fixed locations, are changed due to the sensor measurement data; GP 336 now comes closer to unknown function 301 of the spatio-temporal phenomenon. Furthermore, the 2sigma bound 338 close to the measurement locations is reduced stronger than further away such as at location $x = 0$. Since the sensor measurement data is now incorporated into mean $\underline{\mu}_1^g$ and covariance $\mathbf{C}_1^g$ the measurements can be discarded.

At time step = 2, five measurements at locations $x_{2,1} = 3.572$, $x_{2,2} = 3.585$, $x_{2,3} = 0.502$, $x_{2,4} = 0.829$ , and $x_{2,5}$ = 0.206, are received. The corresponding sensor measurement data is $y_{2,1} = 0.196$, $y_{2,2} = 0.127$, $y_{2,3} = 0.822$, $y_{2,4} =$ -0.084, and $y_{2,5} = 1.597$. Location and data of these five measurements is given by star symbols in plots 340 and 350 in Fig. 3. Hence, there are three star symbols on the left side and two star symbols on the right side. Again, the measurement data is noisy, and, therefore, does not exactly represent a value of the unknown function $g(x)$ at the respective sensor measurement locations due to the noise $\in$.

The inference step of formulas (16) - (18) with matrix $\mathbf{X}_2$ of the sensor node locations gives

$$J_2 = \begin{bmatrix} -0.017 & 0.046 & -0.101 & 1.053 \\ -0.02 & 0.055 & -0.119 & 1.062 \\ 0.998 & 0.003 & -0.002 & 0 \\ 0.674 & 0.49 & -0.1779 & 0.063 \\ 1.159 & -0.371 & 0.182 & -0.068 \end{bmatrix}$$

$$\underline{\mu}_2^p = \begin{bmatrix} 0.679 & 0.68 & -0.269 & -0.427 & -0.136 \end{bmatrix}^T$$

$$\mathbf{C}_2^p = \begin{bmatrix} 0.265 & 0.268 & 0.082 & 0.125 & 0.036 \\ 0.268 & 0.272 & 0.083 & 0.127 & 0.036 \\ 0.082 & 0.082 & 0.9 & 0.785 & 0.905 \\ 0.125 & 0.127 & 0.0785 & 0.734 & 0.739 \\ 0.036 & 0.036 & .0905 & 0.739 & 0.973 \end{bmatrix}$$

The result of this inference step can be seen in plot 340. Sensor node locations $x_{2,1}$ and $x_{2,2}$ are close (two star symbols in close proximity), however, it can be seen that black stars 344 are not exactly on the unknown function 301 of the spatio-temporal phenomenon which is due to the noise $\in$. Furthermore, it is illustrated that the vertical bars for the current measurement data are shorter. The 2sigma bound for the two measurements (at 344) on the right side is shorter than the bound for the three measurements on the left side. In other words, the 2sigma bound at, for example, sensor location $x_{2,2}$ 344 has a smaller variance 345.

By applying formulas (19) - (21) on the results of the current inference step the update of mean $\underline{\mu}_2^g$ and covariance $\mathbf{C}_2^g$ can be calculated:

$$\widetilde{\mathbf{G}}_2 = \begin{bmatrix} -0.005 & -0.009 & 0.455 & 0.306 & 0.274 \\ 0.005 & 0.08 & -0.325 & 0.896 & -0.077 \\ -0.028 & -0.043 & 0.029 & -0.081 & 0.019 \\ 0.463 & 0.431 & 0.02 & 0 & -0.019 \end{bmatrix}$$

$$\underline{\mu}_2^g = \begin{bmatrix} 0.814 & -0.794 & 0.142 & 0.198 \end{bmatrix}^T$$

$$\mathbf{C}_2^g = \begin{bmatrix} 0.005 & -0.003 & 0 & 0 \\ -0.003 & 0.05 & -0.002 & -0.004 \\ 0 & -0.002 & 0.007 & 0 \\ 0 & -0.004 & 0 & 0.006 \end{bmatrix}$$

The result of the update step at time step t = 2 can be seen in plot 350. GP 356 is now improved compared to the former estimate of GP 336, and comes now closer to unknown function 301 of the spatio-temporal phenomenon. Furthermore, the 2sigma bound 358 is recognizably better than the former estimate 338. Again, the sensor measurement data is integrated into mean $\underline{\mu}_2^g$ and covariance $\mathbf{C}_2^g$ and the measurements can be discarded, thus, the memory requirements of the data structure remains the same and no further memory capabilities are required.

The current mean $\underline{\mu}_2^g$ and covariance $\mathbf{C}_2^g$ has all sensor measurement data integrated. Therefore, the spatio-temporal phenomenon can be interpolated at arbitrary locations, for example, at points on the interval [0,4] with a corresponding location matrix $\mathbf{X}_*$. This is achieved by applying formula (22) to (24) with $\mathbf{X}_*$ for deriving the respective $\mu*$ and covariance $\mathbf{C}*$ for an, for example, visual illustration of the spatio-temporal phenomenon.

Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

**Claims**

1. A computer implemented method (200) for updating a data structure (117, 127) reflecting a spatio-temporal phenomenon in a physical area (102), wherein the spatio-temporal phenomenon is estimated at any location of the physical area (102) by a Gaussian Process with a mean function and a covariance function, the method comprising:

storing (210) a data set (115) adapted to represent fixed locations (114) of the physical area (102), wherein the data set (115) has a mean vector and a covariance matrix according to the Gaussian Process, and wherein the data structure (117, 127) includes the mean vector and the covariance matrix;

receiving (222, 224) sensor measurement data (109) of the spatio-temporal phenomenon from at least one sensor node out of a plurality of sensor nodes located at specific arbitrary locations (104, 106) of the physical area (102); and

merging (230) the specific arbitrary locations (104, 106) and the received measurement data (109) into the data structure (117, 127) by using exact recursive Bayesian regression.

2. The computer implemented method of claim 1, wherein merging further comprises
inferring (232, 234) an intermediary mean vector and an intermediary covariance matrix from the specific arbitrary locations (104, 106), the data set (115), the mean vector, and the covariance matrix; and
updating (236, 238) the data structure (117, 127) by incorporating the intermediary mean vector and the sensor measurement data (109) into the mean vector, and the intermediary covariance matrix into the covariance matrix.

3. The computer implemented method of claim 1 or 2, wherein an inversion of the kernel matrix of the data set (115) is stored (240) in a further data structure (123).

4. The computer implemented method of anyone of the claims 1 to 3, further comprising
calculating an initial mean vector (252) and an initial covariance matrix (254) by applying the mean function on the data set (115) and by applying the data set (115) with itself on the covariance function.

5. The computer implemented method of claim 3 or 4, wherein at least one location is added to the data set (115), and wherein the mean vector, the covariance matrix, and the further data structure (123) are updated accordingly.

6. The computer implemented method of anyone of the claims 3 to 5, wherein at least one fixed location (114) of the data set (115) is removed, and wherein the mean vector, the covariance matrix, and the further data structure (123) are updated accordingly.

7. The computer implemented method of anyone of the claims 1 to 6, wherein the measurement data (109, 509) received from the plurality of sensor nodes lacks (552, 553) sensor measurement of at least one sensor node (540).

8. The computer implemented method of anyone of the claims 1 to 7, wherein a specific arbitrary location of at least one sensor node (520) has changed over time (530).

9. The computer implemented method of anyone of the claims 1 to 8, further comprising
deriving (280) estimation data (137) of the spatio-temporal phenomenon for arbitrary locations (134, 125) at the physical area (102, 132) from the mean vector and the covariance matrix, wherein at least one arbitrary location lacks measurement data; and
generating (290) a notification dependent (139) on the estimated data (137).

10. A computer program product that when loaded into a memory of a computing system (100) and executed by at least one processor of the computing device executes the steps of the computer implemented method (200) according to anyone of the claims 1 to 9.

11. A computer system (120) for updating a data structure (117, 127) reflecting a spatio-temporal phenomenon in a physical area (102), wherein the spatio-temporal phenomenon is estimated at any location of the physical area (102) by a Gaussian Process with a mean function and a covariance function, comprising:

an interface component (121) adapted to receive (224) sensor location data (106) of at least one sensor node out of a plurality of sensor nodes placed at specific arbitrary locations (104) of the physical area (102), and adapted to receive (222) sensor measurement data (109) of the spatio-temporal phenomenon in the physical area (102) from the at least one sensor node;

an inference component (128) configured to calculate (232, 234) an intermediary mean vector and an intermediary covariance matrix from:

- the sensor location data (106),
- a data set (115) adapted to represent fixed locations (114) of the physical area, wherein the data set (115) has a mean vector and a covariance matrix according to the Gaussian Process, and wherein the data structure (117, 127) includes the mean vector and the covariance matrix; and

an update component (129) configured to incorporate (236, 238) the intermediary mean vector and the sensor measurement data (109) into the mean vector, and the intermediary covariance matrix into the covariance matrix.

**12.** The computer system of claim 11, further comprising a memory module (123) to store (240) an inversion of the kernel matrix of the data set (115).

**13.** The computer system of claim 11 or 12, further comprising
an initialization component (118) configured to calculate (250) an initial mean vector and an initial covariance matrix by applying the mean function on the data set (115) and by applying the data set (115) with itself on the covariance function.

**14.** The computer system of anyone of the claims 11 to 13, wherein the computer system is configured to process sequentially received sensor measurement data (109, 509) of at least one sensor node (520) out of the plurality of sensor nodes, wherein its location has changed (530) over time.

**15.** The computer system of anyone of the claims 11 to 14, further comprising
an interpolation allocation component (136) configured to obtain a further data set (125) adapted to represent interpolation locations (134) of the representation of the physical area (132);
an interpolation component (138) configured to calculate (280) an interpolation mean vector and an interpolation covariance matrix from the further data set (125), the data set (115), the mean vector, and the covariance matrix; and
a representation component (131) configured to generate (290) a notification (139) based on the interpolation mean vector and the interpolation covariance matrix.

**FIG. 1**

FIG. 2

FIG. 3

FIG. 4

FIG. 5

## EUROPEAN SEARCH REPORT

**Application Number**

EP 12 17 9412

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOULIS A ET AL: "Aggregation in sensor networks: an energy accuracy trade-off", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS], IEEE OPERATIONS CENTER, PISCATAWAY, NJ, 1 January 2003 (2003-01-01), pages 128-138, XP010642624, ISBN: 978-0-7803-7802-5 | 1,5-11 | INV. G06N99/00 |
| A | * the whole document * | 2-4, 12-15 | |
| X | DIETER FOX ET AL: "Bayesian Filtering for Location Estimation", IEEE PERVASIVE COMPUTING, IEEE SERVICE CENTER, LOS ALAMITOS, CA, US , vol. 2, no. 3 30 September 2003 (2003-09-30), pages 24-33, XP002598055, ISSN: 1536-1268 Retrieved from the Internet: URL:http://ieeexplore.ieee.org/xpls/abs_al l.jsp?arnumber=1228524&tag=1 [retrieved on 2010-08-25] | 1,5-11 | |
| A | * the whole document * | 2-4, 12-15 | |

TECHNICAL FIELDS SEARCHED (IPC)

G06N
G06K

-/--

The present search report has been drawn up for all claims

| Place of search | Date of completion of the search | Examiner |
|---|---|---|
| The Hague | 13 December 2012 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 12 17 9412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OSBORNE M A ET AL: "Towards Real-Time Information Processing of Sensor Network Data Using Computationally Efficient Multi-output Gaussian Processes", INFORMATION PROCESSING IN SENSOR NETWORKS, 2008. IPSN '08. INTERNATIONAL CONFERENCE ON, IEEE, PISCATAWAY, NJ, USA, 22 April 2008 (2008-04-22), pages 109-120, XP031246704, ISBN: 978-0-7695-3157-1 * the whole document * | 1-15 | |
| X | JONATHAN KO ET AL: "GP-BayesFilters: Bayesian filtering using Gaussian process prediction and observation models", INTELLIGENT ROBOTS AND SYSTEMS, 2008. IROS 2008. IEEE/RSJ INTERNATIONAL CONFERENCE ON, IEEE, PISCATAWAY, NJ, USA, 22 September 2008 (2008-09-22), pages 3471-3476, XP031348720, ISBN: 978-1-4244-2057-5 | 1,5-11 | |
| A | * the whole document * | 2-4, 12-15 | **TECHNICAL FIELDS SEARCHED (IPC)** |

The present search report has been drawn up for all claims

| Place of search | Date of completion of the search | Examiner |
|---|---|---|
| The Hague | 13 December 2012 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARL E. RASMUSSEN ; CHRISTOPHER WILLIAMS.** Gaussian Processes for Machine Learning. MIT Press, 2006
- Tracking in Uncertain Environments. **D. J. SALMOND.** Ph.D. dissertation. Royal Aerospace Establishment, 1989, vol. A.4, 261-262
- **W. J. DUNCAN.** Some devices for the solution of large sets of simulations linear equations. *Philosophical Magazine Series 7,* 1944, vol. 35 (249), 660-670

- **A.H. JAZWINSKI.** Stochastic Processes and Filtering Theory. Dover Publications, inc, 2007
- **W.H. PRESS ; S.A. TEUKOLSKY ; W.T. VETTERLING ; B.P. FLANNERY.** Numerical Recipes: The Art of Scientific Computing. Cambridge University Press, 2007